# DEMANDE DE BREVET EUROPEEN

(11) **EP 3 363 501 A1**
(43) Date de publication de la demande: **22.08.2018**
(21) Numéro de dépôt: 18157731.3
(22) Date de dépôt: 20.02.2018
(51) Int. Cl.: A62B 35/00, F16B 45/02

(54) **SYSTÈME D'ARRIMAGE D'UNE PERSONNE EN HAUTEUR**

(30) Priorité: 20.02.2017 FR 1770161
(71) Demandeur: Dehondt, Thierry Jean Alain Cornil, 51430 Tinqueux (FR)
(72) Inventeur: Dehondt, Thierry Jean Alain Cornil, 51430 Tinqueux (FR)
(74) Mandataire: Sayettat, Julien Christian

(57) **Abrégé**

L'invention concerne un système d'arrimage (1) comprenant: un premier organe d'ancrage (2) destiné à être fixé à ladite personne ; un moyen d'empêchement (3) de l'accès de ladite personne à un parcours en hauteur (4) ; un deuxième organe d'ancrage (5) fixé audit moyen d'empêchement, un bloc d'ancrage (6) comprenant un support (7) comprenant : un premier logement de réception dudit premier organe pourvu d'un premier moyen de blocage dudit organe dans ledit logement ; un deuxième logement de réception dudit deuxième organe pourvu d'un deuxième moyen de blocage dudit organe dans ledit logement, ledit moyen d'empêchement étant agencé de manière à être activé par blocage dudit deuxième organe dans ledit deuxième logement ; un moyen d'attache (12) à un élément d'arrimage (13), ledit premier moyen de blocage est agencé de sorte que ledit moyen d'empêchement soit activé par retrait dudit premier organe dudit premier logement, ledit deuxième moyen de blocage est agencé de sorte que la désactivation dudit moyen d'empêchement entraine un blocage dudit premier organe dans ledit premier logement.

## Description

L'invention concerne un système d'arrimage d'une personne en hauteur, et une installation destinée à recevoir une personne en hauteur comprenant un tel système.

Il est connu de réaliser un système d'arrimage d'une personne en hauteur, ledit système comprenant :
- un premier organe d'ancrage destiné à être fixé à ladite personne, notamment au moyen d'un harnais,
- un moyen d'empêchement de l'accès de ladite personne à un parcours en hauteur
- un deuxième organe d'ancrage fixé audit moyen d'empêchement,
- un bloc d'ancrage comprenant un support, ledit support comprenant :
   ∘ un premier logement de réception dudit premier organe, ledit logement étant pourvu d'un premier moyen de blocage dudit organe dans ledit logement,
   ∘ un deuxième logement de réception dudit deuxième organe, ledit logement étant pourvu d'un deuxième moyen de blocage dudit organe dans ledit logement, ledit moyen d'empêchement étant agencé de manière à être activé par blocage dudit deuxième organe dans ledit deuxième logement,
   ∘ un moyen d'attache à un élément d'arrimage.

Cependant, avec un tel système, se présente le risque que la personne accède au parcours après avoir décroché le deuxième organe du bloc d'ancrage sans avoir disposé et bloqué le premier organe dans son logement.

La personne est alors en situation d'insécurité du fait qu'elle n'est pas arrimée, par l'intermédiaire du bloc d'ancrage, à l'élément d'arrimage.

L'invention a pour but de pallier cet inconvénient.

A cet effet, et selon un premier aspect, l'invention propose un système d'arrimage d'une personne en hauteur, ledit système comprenant :
- un premier organe d'ancrage destiné à être fixé à ladite personne,
- un moyen d'empêchement de l'accès de ladite personne à un parcours en hauteur,
- un deuxième organe d'ancrage fixé audit moyen d'empêchement,
- un bloc d'ancrage comprenant un support, ledit support comprenant :
   ∘ un premier logement de réception dudit premier organe, ledit logement étant pourvu d'un premier moyen de blocage dudit organe dans ledit logement,
   ∘ un deuxième logement de réception dudit deuxième organe, ledit logement étant pourvu d'un deuxième moyen de blocage dudit organe dans ledit logement, ledit moyen d'empêchement étant agencé de manière à être activé par blocage dudit deuxième organe dans ledit deuxième logement,
   ∘ un moyen d'attache à un élément d'arrimage,
ledit système présentant en outre les caractéristiques suivantes :
- ledit premier moyen de blocage est agencé de manière à être désactivé par insertion dudit deuxième organe dans ledit deuxième logement, ledit deuxième moyen de blocage étant agencé pour être ensuite activé par retrait dudit premier organe dudit premier logement, de sorte que ledit moyen d'empêchement soit activé par retrait dudit premier organe dudit premier logement,
- ledit deuxième moyen de blocage est agencé de manière à être désactivé par insertion dudit premier organe dans ledit premier logement, ledit premier moyen de blocage étant agencé pour être ensuite activé par retrait dudit deuxième organe dudit deuxième logement, de sorte que la désactivation dudit moyen d'empêchement entraine un blocage dudit premier organe dans ledit premier logement.

Avec l'agencement proposé, le décrochement du deuxième organe est nécessairement précédé d'une introduction et d'un blocage du premier organe dans son logement, ce qui permet de garantir la sécurité de la personne accédant au parcours en hauteur.

Selon un deuxième aspect, l'invention concerne une installation destinée à recevoir une personne en hauteur, ladite installation comprenant un tel système.

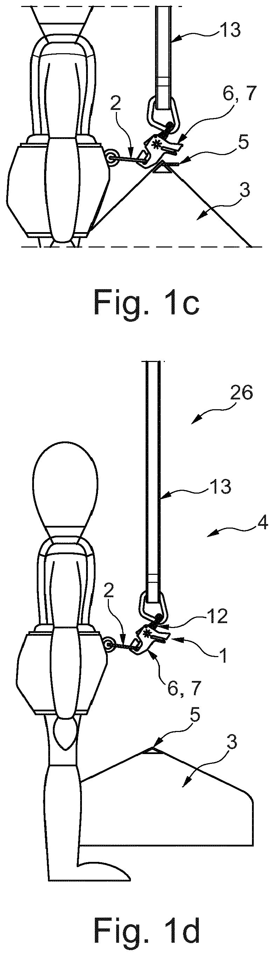

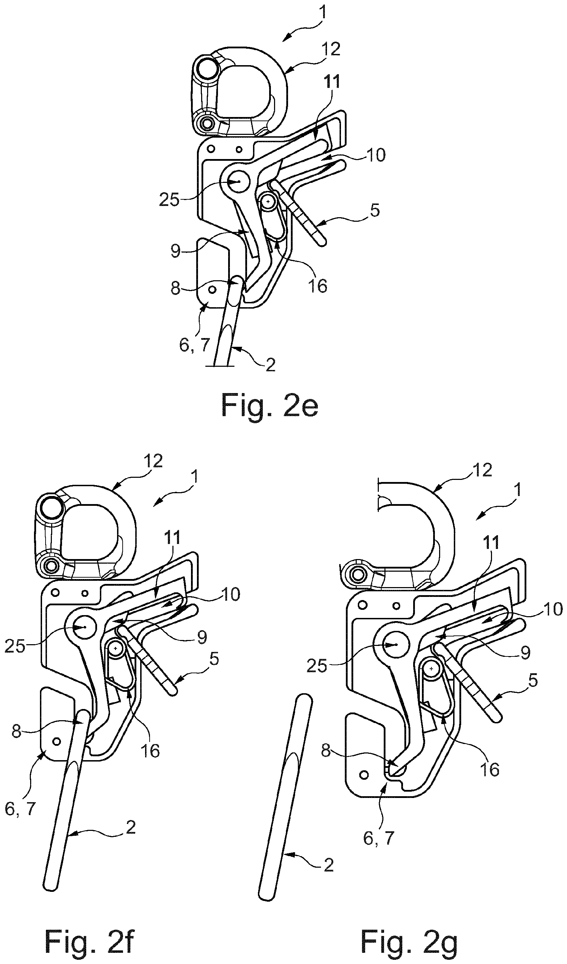

D'autres particularités et avantages de l'invention apparaîtront dans la description qui suit, faite en référence aux figures jointes, dans lesquelles :

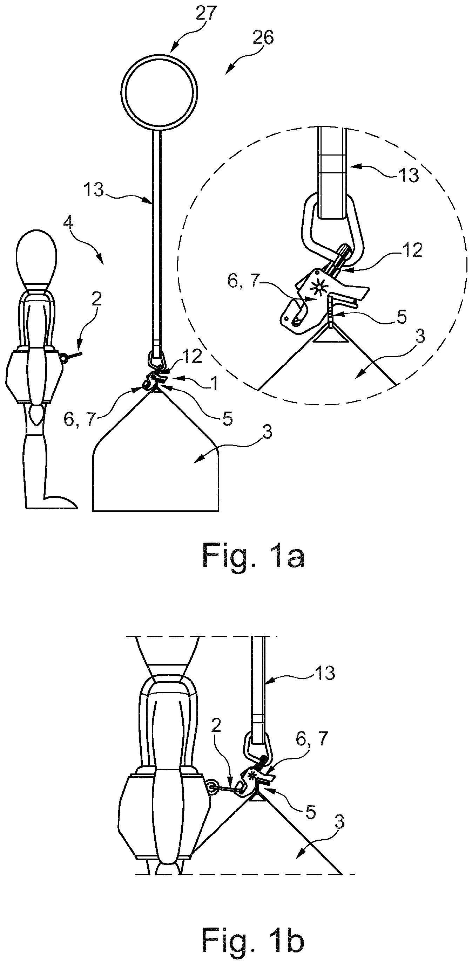

- les figures 1a à 1d sont des vues schématiques d'une installation destinée à recevoir une personne en hauteur comprenant un système selon une réalisation :
   ∘ en vue d'ensemble, avec un agrandissement de détail, le moyen d'empêchement d'accès étant activé par blocage du deuxième organe dans son logement (figure 1a),
   ∘ en vue de détail lors de l'arrimage d'une personne, le premier organe étant introduit dans son logement (figure 1b),
   ∘ en vue de détail en cours de désactivation du moyen d'empêchement d'accès, le deuxième organe étant retiré de son logement (figure 1c),
   ∘ en vue d'ensemble partielle, le moyen d'empêchement d'accès étant désactivé et la personne étant arrimée (figure 1d),

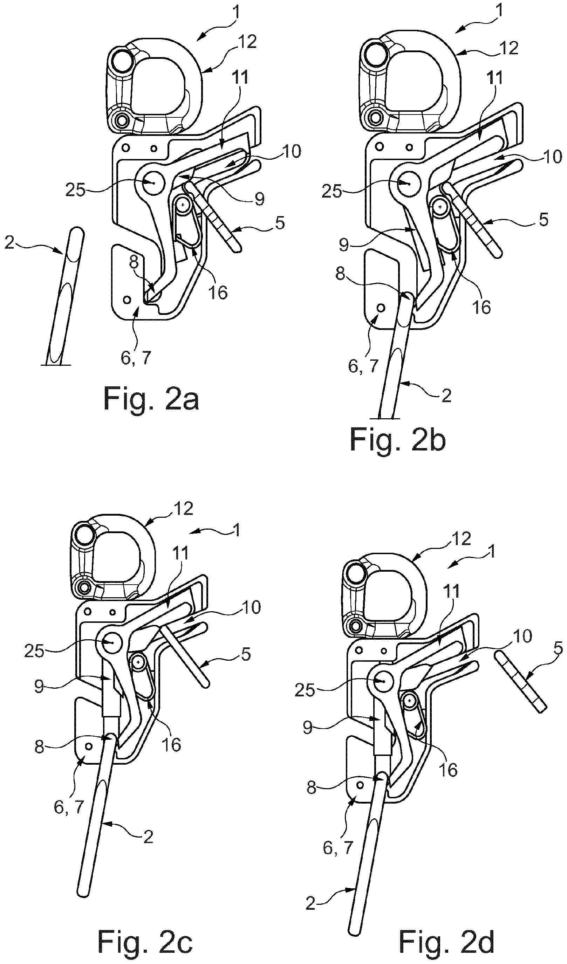

- les figures 2a à 2g sont des vues schématique partielles de détail du système des figures 1a à 1d dans différentes étapes successives de son utilisation :
   ∘ le deuxième organe étant bloqué dans son logement et le deuxième organe est bloqué dans son logement (figure 2a),
   ∘ le premier organe étant introduit dans son logement de manière à débloquer le deuxième organe de son logement (figure 2b),
   ∘ le deuxième organe étant en cours de retrait de son logement de manière à bloquer le premier organe dans son logement (figure 2c),
   ∘ le deuxième organe étant retiré de son logement (figure 2d),
   ∘ le deuxième organe étant réintroduit dans son logement de manière à débloquer le premier organe de son logement (figure 2e),
   ∘ le premier organe étant en cours de retrait de son logement de manière à bloquer le deuxième organe dans son logement (figure 2f),
   ∘ le premier organe étant retiré de son logement et le deuxième organe étant bloqué dans son logement (figure 2g),
- la figure 3 est une vue agrandie de la figure 2d,
- les figures 4a et 4b sont analogues à la figure 2e dans lesquelles est représenté le moyen de blocage additionnel en position de blocage (figure 4a) et de déblocage manuel (figure 4b) permettant un retrait du premier organe de son logement,
- la figure 5 est une vue schématique en perspective éclatée du bloc d'ancrage du système des figures précédentes.

En référence aux figures, on décrit un système 1 d'arrimage d'une personne en hauteur, ledit système comprenant :
- un premier organe 2 d'ancrage destiné à être fixé à ladite personne, notamment au moyen d'un harnais,
- un moyen d'empêchement 3 de l'accès de ladite personne à un parcours en hauteur 4,
- un deuxième organe d'ancrage 5 fixé audit moyen d'empêchement,
- un bloc d'ancrage 6 comprenant un support 7, ledit support comprenant :
   ∘ un premier logement 8 de réception dudit premier organe, ledit logement étant pourvu d'un premier moyen de blocage 9 dudit organe dans ledit logement,
   ∘ un deuxième logement 10 de réception dudit deuxième organe, ledit logement étant pourvu d'un deuxième moyen de blocage 11 dudit organe dans ledit logement, ledit moyen d'empêchement étant agencé de manière à être activé par blocage dudit deuxième organe dans ledit deuxième logement,
   ∘ un moyen d'attache 12 à un élément d'arrimage 13,
ledit système présentant en outre les caractéristiques suivantes :
- ledit premier moyen de blocage est agencé de manière à être désactivé par insertion dudit deuxième organe dans ledit deuxième logement, ledit deuxième moyen de blocage étant agencé pour être ensuite activé par retrait dudit premier organe dudit premier logement, de sorte que ledit moyen d'empêchement soit activé par retrait dudit premier organe dudit premier logement,
- ledit deuxième moyen de blocage est agencé de manière à être désactivé par insertion dudit premier organe dans ledit premier logement, ledit premier moyen de blocage étant agencé pour être ensuite activé par retrait dudit deuxième organe dudit deuxième logement, de sorte que la désactivation dudit moyen d'empêchement entraine un blocage dudit premier organe dans ledit premier logement.

Selon la réalisation représentée, les moyens de blocage 9,11 présentent les caractéristiques suivantes :
- le premier moyen de blocage 9 est sous forme d'un premier portillon pourvu d'une première 14 et d'une deuxième 15 branche, ledit portillon étant monté rotatif entre lesdites branches sur le support 7, ledit portillon étant actionné par un premier moyen ressort 16 vers une position de blocage où la première desdites branches - ici en son extrémité libre - obstrue le premier logement 8 de manière à y maintenir le premier organe 2, ladite deuxième branche présentant une face de glissement 17 agencée pour recevoir en appui le deuxième organe 5 lors de son introduction dans le deuxième logement 10 afin d'actionner en rotation ledit portillon vers une position de déblocage où ladite première branche désobstrue ledit premier logement de manière à permettre un retrait dudit premier organe,
- le deuxième moyen de blocage 11 est sous forme d'un deuxième portillon pourvu d'une première 18 et d'une deuxième 19 branche, ledit portillon étant monté rotatif entre lesdites branches sur ledit support, ledit portillon étant actionné par un deuxième moyen ressort 16 vers une position de blocage où la première desdites branches - ici en son extrémité libre qui est conformée en crochet - obstrue le deuxième logement 10 de manière à y maintenir le deuxième organe 5, ladite deuxième branche présentant une face de glissement 20 agencée pour recevoir en appui le premier organe 2 lors de son introduction dans le premier logement 8 afin d'actionner en rotation ledit portillon vers une position de déblocage où ladite première branche désobstrue ledit deuxième logement de manière à permettre un retrait dudit deuxième organe.

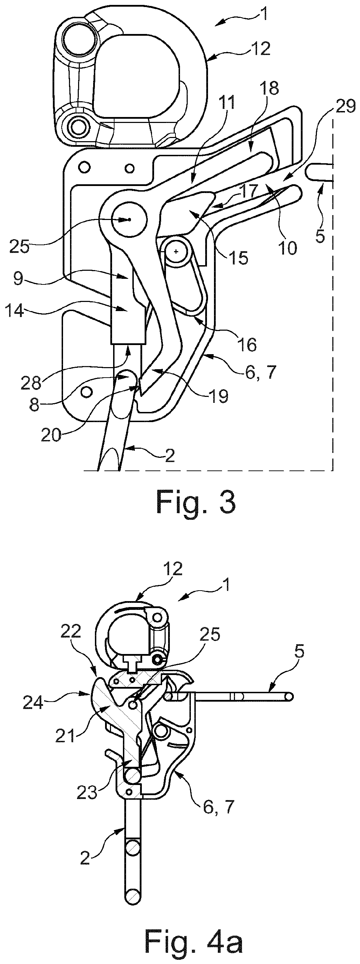

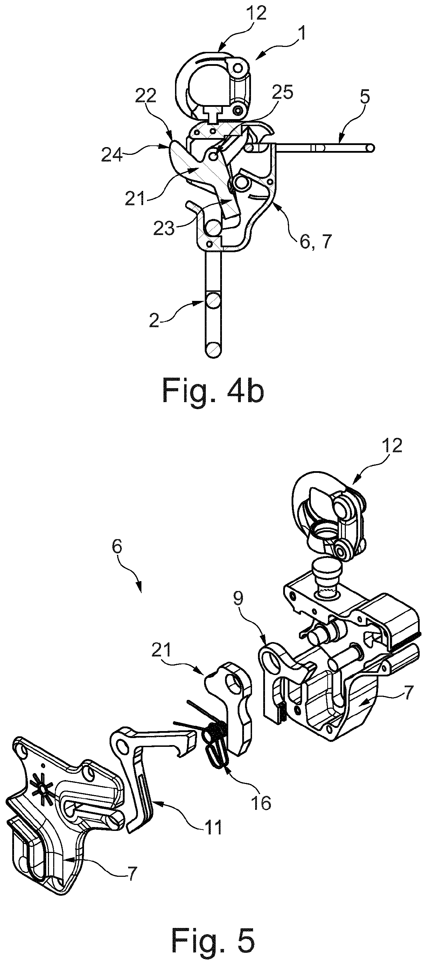

Selon la réalisation représentée, comme visualisé en figures 4, le système 1 comprend en outre un moyen de blocage additionnel 21 du premier organe 2 dans le premier logement 8, ledit moyen comprenant une face d'appui 22, ledit moyen étant agencé de manière être désactivé par appui manuel exercé sur ladite face, pour autoriser un retrait dudit premier organe dudit premier logement.

La présence d'un tel moyen de blocage additionnel 21 permet d'apporter une « double sécurité », le retrait du premier organe 2 de son logement 8 devant être précédé d'un actionnement manuel dudit moyen additionnel par la personne.

Selon la réalisation représentée, le moyen de blocage additionnel 21 est sous forme d'un troisième portillon pourvu d'une première 23 et d'une deuxième 24 branche, ledit portillon étant monté rotatif entre lesdites branches sur le support 7, ledit portillon étant actionné par un troisième moyen ressort 16 vers une position de blocage où ladite première branche - ici en son extrémité libre - obstrue le premier logement 8 de manière à y maintenir le premier organe 2, ladite deuxième branche étant pourvue de la face d'appui 22 qui est saillante dudit support dans ladite position de blocage, un appui manuel exercé sur ladite face actionnant en rotation ledit portillon vers une position de déblocage où ladite première branche désobstrue ledit premier logement de manière à autoriser un retrait dudit premier organe.

Selon la réalisation représentée, les moyens ressort sont confondus, prenant ici la forme d'un ressort filaire à triple action.

Selon la réalisation représentée, les premier 9, deuxième 11 et troisième 21 portillons sont montés rotatifs selon un même axe de rotation 25.

Selon la réalisation représentée, le moyen d'attache 12 est sous forme de demi-émerillon.

Selon la réalisation représentée, au moins un organe d'ancrage 2,5 - et en particulier les deux dans la réalisation représentée - est sous forme de boucle.

Selon la réalisation représentée :
- les organes d'ancrage 2,5 sont de section différente, de manière à éviter l'introduction d'un desdits organes dans un logement 10,8 qui ne lui est pas destiné,
- l'organe d'ancrage de plus faible section - ici le deuxième 5 - est sous forme de boucle dont les dimensions extérieures sont agencées pour empêcher l'introduction dudit organe dans le logement - ici le premier 8 - qui ne lui est pas destiné

De façon non représentée, le support 7 peut être pourvu, notamment pour faire face à des situations d'urgence, d'un passage d'accès à un outil pour débloquer le premier logement 8 sans avoir à introduire le deuxième organe 5 dans le deuxième logement 10, ledit outil agissant sur le premier moyen de blocage 9.

Selon la réalisation représentée :
- la face de glissement 20 du deuxième moyen de blocage 11 est éloignée de l'extrémité 28 du premier logement 8 pouvant être obstruée par la première branche 14 du premier moyen de blocage 9,
- la face de glissement 17 du premier moyen de blocage 9 est éloignée de l'extrémité 29 du deuxième logement 10 pouvant être obstruée par la première branche 18 du deuxième moyen de blocage 11,
de sorte que, en cas de tentative de retrait simultané des organes 2,5 de leurs logements respectifs 8,10, lesdits organes se déplacent dans lesdits logements de manière à perdre leur appui contre les faces de glissement correspondantes 20,17, de façon à réactiver les moyens de blocage 11,9 comprenant chacune desdites faces pour empêcher le retrait desdits organes desdits logements.

Avec un tel agencement, il est impossible pour la personne de décrocher simultanément les deux organes 2,5 du bloc d'ancrage 6, ce qui permet d'optimiser sa sécurité.

On détaille ici les étapes successives d'utilisation d'un tel système :
- en début de parcours 4, le premier organe 2 est hors de son logement 8 et le deuxième organe 5 est bloqué dans son logement 10 (figure 2a),
- la personne introduit alors le premier organe 2 dans son logement 8 de manière à débloquer le deuxième organe 5 de son logement 10 (figure 2b),
- le deuxième organe 5 est alors retiré de son logement 10 de manière à désactiver le moyen d'empêchement 3 et à bloquer le premier organe 2 dans son logement 8 (figure 2c et 2d),
- en fin de parcours 4, la personne réintroduit le deuxième organe 5 dans son logement 10 de manière à débloquer le premier organe 2 de son logement 8 (figure 2e),
- la personne actionne alors le moyen de blocage additionnel 21 de sa position de blocage (figure 4a) à sa position de déblocage (figure 4b),
- elle retire enfin le premier organe 2 de son logement 8 de manière à bloquer le deuxième organe 5 dans son logement 10 (figure 2f et 2g) et à activer le moyen d'empêchement 3.

On décrit enfin, en référence aux figures 1, une installation 26 destinée à recevoir une personne en hauteur, ladite installation comprenant :
- un système 1 tel que décrit précédemment,
- un élément d'arrimage 13 associé au moyen d'attache 12,
- un parcours en hauteur 4, notamment sous forme de paroi d'escalade, ledit élément d'arrimage étant fixé sur ledit parcours.

Selon la réalisation représentée en figures 1 :
- l'élément d'arrimage 13 est sous forme de lien souple - notamment un câble ou une sangle - dont une première extrémité est associée au moyen d'attache 12,
- l'installation 26 comprend en outre un dispositif d'enroulement 27 dudit lien associé à la deuxième extrémité dudit lien, ledit dispositif étant agencé de manière à actionner ledit lien en enroulement, ledit dispositif étant pourvu, de façon non représentée, d'un moyen de blocage du déroulement, de manière à retenir ladite personne en cas de chute, ledit moyen étant agencé de manière à ne pouvoir être désactivé que par manoeuvre volontaire.

Selon la réalisation représentée, le moyen d'empêchement 3 est sous forme de nappe souple, notamment sous la forme d'un tapis ou d'un filet, s'étendant en hauteur lorsqu'il est activé, de par la traction exercée par le dispositif d'enroulement 27, de manière à former une barrière à l'accès au parcours 4.

En variante non représentée, l'élément d'arrimage 13 peut être sous forme de rail, ou de câble monté en tension, d'une ligne de vie.

## Revendications

1. Système d'arrimage (1) d'une personne en hauteur, ledit système comprenant :
• un premier organe d'ancrage (2) destiné à être fixé à ladite personne,
• un moyen d'empêchement (3) de l'accès de ladite personne à un parcours en hauteur (4),
• un deuxième organe d'ancrage (5) fixé audit moyen d'empêchement,
• un bloc d'ancrage (6) comprenant un support (7), ledit support comprenant :
∘ un premier logement (8) de réception dudit premier organe, ledit logement étant pourvu d'un premier moyen de blocage (9) dudit organe dans ledit logement,
∘ un deuxième logement (10) de réception dudit deuxième organe, ledit logement étant pourvu d'un deuxième moyen de blocage (11) dudit organe dans ledit logement, ledit moyen d'empêchement étant agencé de manière à être activé par blocage dudit deuxième organe dans ledit deuxième logement,
∘ un moyen d'attache (12) à un élément d'arrimage (13),
ledit système étant **caractérisé en ce que** :
• ledit premier moyen de blocage est agencé de manière à être désactivé par insertion dudit deuxième organe dans ledit deuxième logement, ledit deuxième moyen de blocage étant agencé pour être ensuite activé par retrait dudit premier organe dudit premier logement, de sorte que ledit moyen d'empêchement soit activé par retrait dudit premier organe dudit premier logement,
• ledit deuxième moyen de blocage est agencé de manière à être désactivé par insertion dudit premier organe dans ledit premier logement, ledit premier moyen de blocage étant agencé pour être ensuite activé par retrait dudit deuxième organe dudit deuxième logement, de sorte que la désactivation dudit moyen d'empêchement entraine un blocage dudit premier organe dans ledit premier logement.

2. Système selon la revendication 1, **caractérisé en ce que** les moyens de blocage (9,11) présentent les caractéristiques suivantes :
• le premier moyen de blocage (9) est sous forme d'un premier portillon pourvu d'une première (14) et d'une deuxième (15) branche, ledit portillon étant monté rotatif entre lesdites branches sur le support (7), ledit portillon étant actionné par un premier moyen ressort (16) vers une position de blocage où la première desdites branches obstrue le premier logement (8) de manière à y maintenir le premier organe (2), ladite deuxième branche présentant une face de glissement (17) agencée pour recevoir en appui le deuxième organe (5) lors de son introduction dans le deuxième logement (10) afin d'actionner en rotation ledit portillon vers une position de déblocage où ladite première branche désobstrue ledit premier logement de manière à permettre un retrait dudit premier organe,
• le deuxième moyen de blocage (11) est sous forme d'un deuxième portillon pourvu d'une première (18) et d'une deuxième (19) branche, ledit portillon étant monté rotatif entre lesdites branches sur ledit support, ledit portillon étant actionné par un deuxième moyen ressort (16) vers une position de blocage où la première desdites branches obstrue le deuxième logement de manière à y maintenir le deuxième organe (5), ladite deuxième branche présentant une face de glissement (20) agencée pour recevoir en appui le premier organe (2) lors de son introduction dans le premier logement (8) afin d'actionner en rotation ledit portillon vers une position de déblocage où ladite première branche désobstrue ledit deuxième logement de manière à permettre un retrait dudit deuxième organe.

3. Système selon l'une des revendications 1 ou 2, **caractérisé en ce qu'**il comprend en outre un moyen de blocage additionnel (21) du premier organe (2) dans le premier logement (8), ledit moyen comprenant une face d'appui (22), ledit moyen étant agencé de manière être désactivé par appui manuel exercé sur ladite face, pour autoriser un retrait dudit premier organe dudit premier logement.

4. Système selon la revendication 3, **caractérisé en ce que** le moyen de blocage additionnel (21) est sous forme d'un troisième portillon pourvu d'une première (23) et d'une deuxième (24) branche, ledit portillon étant monté rotatif entre lesdites branches sur le support (7), ledit portillon étant actionné par un troisième moyen ressort (16) vers une position de blocage où ladite première branche obstrue le premier logement (8) de manière à y maintenir le premier organe (2), ladite deuxième branche étant pourvue de la face d'appui (22) qui est saillante dudit support dans ladite position de blocage, un appui manuel exercé sur ladite face actionnant en rotation ledit portillon vers une position de déblocage où ladite première branche désobstrue ledit premier logement de manière à autoriser un retrait dudit premier organe.

5. Système selon les revendications 2 et 4, **caractérisé en ce que** les premier (9), deuxième (11) et troisième (21) portillons sont montés rotatifs selon un même axe de rotation (25).

6. Système selon l'une quelconque des revendications 1 à 5, **caractérisé en ce qu'**au moins un organe d'ancrage (2,5) est sous forme de boucle.

7. Système selon la revendication 6, **caractérisé en ce que** :
• les organes d'ancrage (2,5) sont de section différente, de manière à éviter l'introduction d'un desdits organes dans un logement (10,8) qui ne lui est pas destiné,
• l'organe d'ancrage de plus faible section (5) est sous forme de boucle dont les dimensions extérieures sont agencées pour empêcher l'introduction dudit organe dans le logement (8) qui ne lui est pas destiné

8. Système selon les revendications 2 à 5, **caractérisé en ce que** :
• la face de glissement (20) du deuxième moyen de blocage (11) est éloignée de l'extrémité (28) du premier logement (8) pouvant être obstruée par la première branche (14) du premier moyen de blocage (9),
• la face de glissement (17) du premier moyen de blocage (9) est éloignée de l'extrémité (29) du deuxième logement (10) pouvant être obstruée par la première branche (18) du deuxième moyen de blocage (11),
de sorte que, en cas de tentative de retrait simultané des organes (2,5) de leurs logements respectifs (8,10), lesdits organes se déplacent dans lesdits logements de manière à perdre leur appui contre les faces de glissement correspondantes (20,17), de façon à réactiver les moyens de blocage (11,9) comprenant chacune desdites faces pour empêcher le retrait desdits organes desdits logements.

9. Installation (26) destinée à recevoir une personne en hauteur, ladite installation comprenant :
• un système (1) selon l'une quelconque des revendications 1 à 8,
• un élément d'arrimage (13) associé au moyen d'attache (12),
• un parcours en hauteur (4), notamment sous forme de paroi d'escalade, ledit élément d'arrimage étant fixé sur ledit parcours.
